# EUROPEAN PATENT APPLICATION

(11) **EP 2 364 828 A1**
(43) Date of publication of application: **14.09.2011**
(21) Application number: 11157984.3
(22) Date of filing: 11.03.2011
(51) Int. Cl.: B27G 13/00, B27D 5/00, B23C 3/12, B23Q 39/02

(54) **Machining unit for machining, in particular trimming, finish edges of wood panels or similar**

(30) Priority: 11.03.2010 IT BO20100145
(71) Applicant: BIESSE S.p.A., Pesaro (IT)
(72) Inventor: Bernardi, Paolo, 47841, CATTOLICA (IT)
(74) Representative: Jorio, Paolo

(57) **Abstract**

A machining unit, for machining finish edges (5) of wood panels (2) or similar, has at least two pairs of milling tools (44) rotated by a propeller shaft (22) about respective longitudinal axes (41); and a selector device (9) for selectively moving each pair of milling tools (44) between a work position, in which the milling tools (44) machine the finish edge (5) of a panel (2), and a rest position.

## Description

The present invention relates to a machining unit for machining, in particular trimming, finish edges of wood panels or similar.

In the machining of wood panels or similar, a machining centre is known comprising an elongated bed extending in a substantially horizontal first direction and having two longitudinal guide members parallel to the first direction; a number of cross members fitted between the longitudinal guide members, parallel to a substantially horizontal second direction crosswise to the first direction, and movable along the bed in the first direction; at least one supporting device fitted to each cross member to form a supporting surface for at least one panel; and a bridge crane, which extends over the bed in the second direction, is movable along the bed in the first direction, supports at least one machining head, and is equipped with at least one edging unit for applying a finish edge along at least part of the outer edge of the panel.

The machining head normally has at least one electrically powered spindle for receiving and retaining a machining tool and/or aggregate, and cooperates with a tool store to change the tools and/or aggregates on the spindle when machining and/or edging the panel locked to the supporting devices.

Once applied to the panel, the finish edge usually projects vertically from the top and bottom faces of the panel, and is trimmed by a trimming aggregate fitted to the spindle and comprising two parallel milling tools for trimming the top and bottom longitudinal edges of the finish edge to a given milling radius.

Because trimming to different milling radii calls for storing a trimming aggregate in the tool store, and changing the trimming aggregate on the spindle, for each milling radius, known machining centres of the type described are relatively expensive and have fairly long production cycles.

It is an object of the present invention to provide a machining unit for machining, in particular trimming, finish edges of wood panels or similar, designed to eliminate the above drawbacks, and which is cheap and easy to produce.

According to the present invention, there is provided a machining unit for machining, in particular trimming, finish edges of wood panels or similar, as claimed in the accompanying Claims.

A non-limiting embodiment of the present invention will be described by way of example with reference to the accompanying drawings, in which :
Figure 1 shows a schematic view in perspective, with parts removed for clarity, of a preferred embodiment of the machining unit according to the present invention;
Figure 2 shows a schematic longitudinal section of the Figure 1 machining unit;
Figure 3 shows a plan view, with parts removed for clarity, of the Figure 1 machining unit.

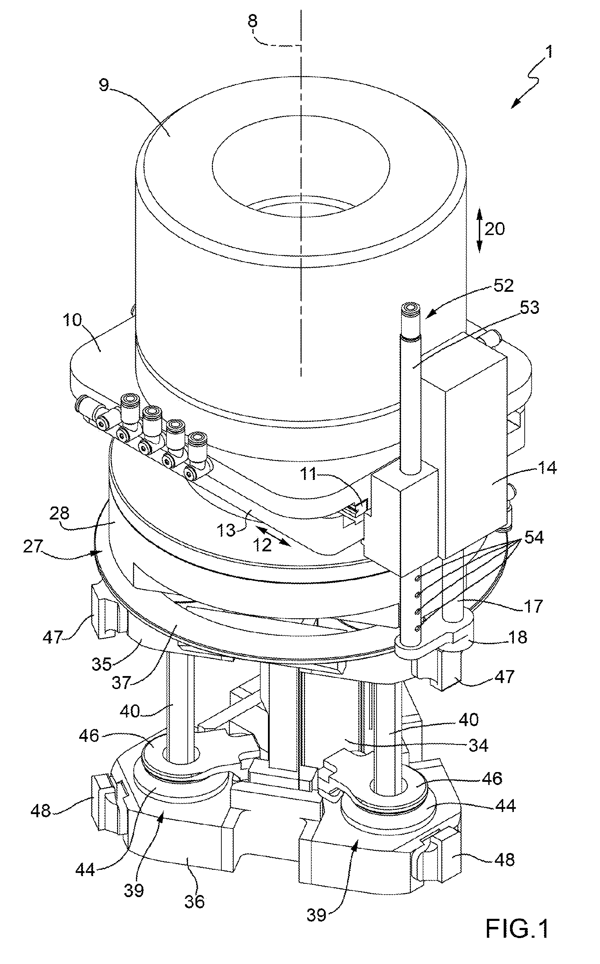

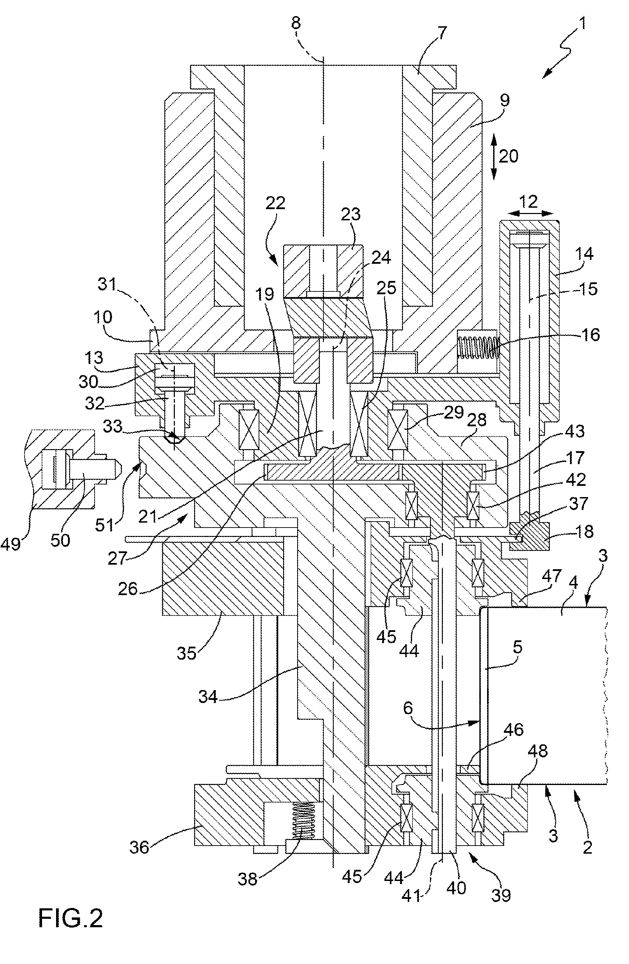

Number 1 in Figures 1 and 2 indicates as a whole a machining unit for machining wood panels 2 or similar, each of which is substantially parallelepiped-shaped with a substantially rectangular cross section, is bounded by two parallel major lateral faces 3 and by a lateral edge 4 substantially perpendicular to faces 3, and has a finish edge 5 applied along at least part of edge 4 and bounded by a major lateral face 6 opposite edge 4.

Unit 1 comprises a tubular frame 7 with a substantially vertical longitudinal axis 8 and fitted with a tubular sleeve 9, which extends about frame 7, coaxially with axis 8, and is fitted to frame 7 to rotate about axis 8 with respect to frame 7 and under the control of a known actuating device not shown.

Sleeve 9 has an annular bottom flange 10 substantially perpendicular to axis 8 and fitted with two straight parallel guides 11, which extend in a horizontal direction 12 crosswise to axis 8, and are oriented according to the position of sleeve 9 about axis 8.

Guides 11 support a plate 13, which extends perpendicularly to axis 8, is fitted with an actuating cylinder 14 with a longitudinal axis 15 parallel to axis 8, and is mounted to run along guides 11 with the interposition of a shock-absorbing device defined by at least one spring 16 between sleeve 9 and cylinder 14. Cylinder 14 comprises an output rod 17 fitted on its bottom free end with a flat bracket 18 substantially perpendicular to axis 15.

Plate 13 has a bottom projection 19, which projects from the bottom of plate 13 in a vertical direction 20 parallel to axis 8, and is engaged in rotary manner by an output portion 21 of a propeller shaft 22, which also comprises an input portion (not shown) fitted through frame 7, coaxially with axis 8, and connected to portion 21 by a known joint 23.

Portion 21 extends through projection 19, has a longitudinal axis 24 parallel to and eccentric with respect to axis 8, is fitted to projection 19 with the interposition of a rolling bearing 25, and is fitted with a bottom gear 26 coaxial with axis 24 and located outside projection 19, on the opposite side to sleeve 9 in direction 20.

Unit 1 also comprises a rotary member 27, in turn comprising a housing 28, which extends about projection 19 and gear 26, is positioned with its concavity facing upwards, is fitted in axially fixed manner to plate 13, and is fitted in rotary manner to projection 19, with the interposition of a rolling bearing 29, to rotate with respect to plate 13 about axis 8.

Plate 13 and member 27 are locked angularly to each other, in use, by an actuating cylinder 30, which is formed in plate 13, has a longitudinal axis 31 parallel to direction 20, and comprises an output rod 32 movable in direction 20 between a lock position, in which rod 32 engages a seat 33 in housing 28, and a release position.

Member 27 also comprises a vertical guide 34 projecting downwards from housing 28 in direction 20 and engaged in sliding manner by a top slide 35 and a bottom slide 36, which extend about guide 34 and are substantially perpendicular to direction 20.

Slide 35 has a substantially flat, annular top flange 37, which extends crosswise to direction 20 and is fitted through bracket 18 of rod 17 in rotary, axially fixed manner; and slide 36 is fitted slidably to guide 34 with the interposition of a shock-absorbing device defined by at least one spring 38 between guide 34 and slide 36.

Unit 1 has three trimming assemblies 39 equally spaced about axis 8, and each comprising a secondary shaft 40, which has a longitudinal axis 41 parallel to direction 20, extends through slides 35 and 36 into housing 28, is fitted in axially fixed manner to housing 28, is fitted in rotary manner to housing 28 with the interposition of a rolling bearing 42, and is fitted, on its top free end inside housing 28, with a gear 43 coaxial with axis 41.

Each shaft 40 supports a pair of milling tools 44, which have different milling radii from tools 44 of the other assemblies 39, are fitted in axially fixed manner to slides 35 and 36 respectively, are fitted in rotary manner to respective slides 35, 36 with the interposition of respective rolling bearings 45, and are connected in sliding and angularly fixed manner to shaft 40 by a splined coupling.

Tools 44 of each assembly 39 cooperate with a face tracer 46 formed on slide 36 and designed, in use, to follow the contour of face 6 of finish edge 5, and to control the movements of plate 13, output portion 21 of shaft 22, rotary member 27, slides 35, 36, and assemblies 39, as a whole, along guides 11 in direction 12 and under the control of spring 16.

Tools 44 of each assembly 39 also cooperate with a top tracer 47 projecting downwards from slide 35 and designed, in use, to follow the contour of top face 3 of panel 2, and to control the movements of slide 35 and respective tool 44 in direction 20 and under the control of cylinder 14; and with a bottom tracer 48 projecting upwards from slide 36 and designed, in use, to follow the contour of bottom face 3 of panel 2, and to control the movements of slide 36 and respective tool 44 in direction 20 and under the control of spring 38.

In connection with the above, it should be pointed out that actuating cylinder 14 provides for controlling the movements of slide 35 in direction 20 as a function of the contour of top face 3 of panel 2, as well as for adjusting slide 35 in direction 20 to the thickness of panel 2 when setting up unit 1.

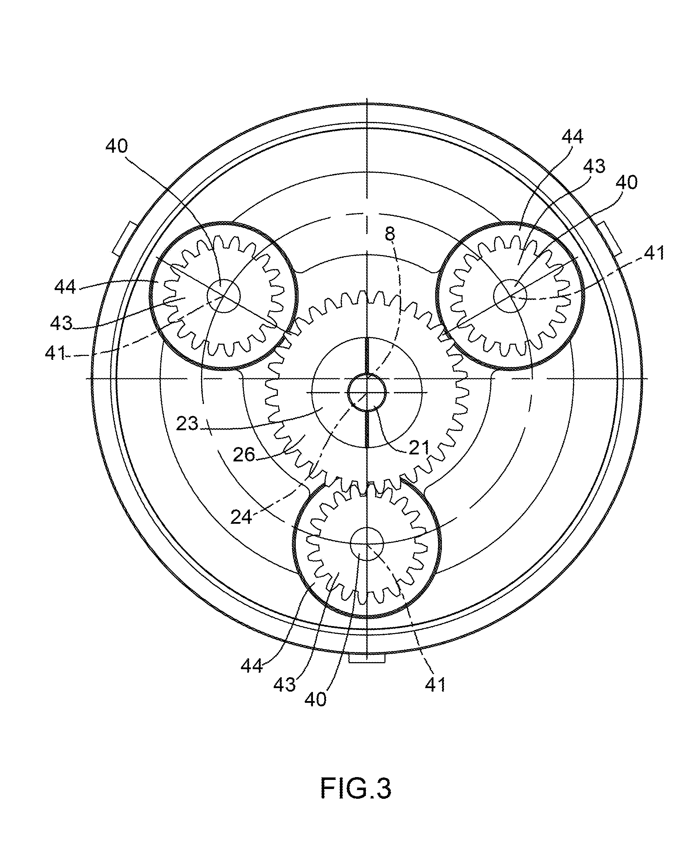

Because output portion 21 of shaft 22 and, therefore, gear 26 are coaxial with axis 24, and shafts 40 and, therefore, gears 43 are spaced about axis 8, gear 26 only meshes with one gear 43 at a time to reduce wear of gears 43 and prevent the noise that would be caused by shafts 40 all rotating at the same time (Figure 3).

To connect gears 43 selectively to gear 26, member 27 is released from plate 13 by moving output rod 32 of cylinder 30 from the lock to the release position, and is locked angularly about axis 8 by a fixed actuator cylinder 49, which extends crosswise to axes 8 and 24, and comprises an output rod 50 movable between a lock position, in which rod 50 engages a seat 51 in the outer surface of housing 28, and a release position.

At this point, the whole defined by sleeve 9, plate 13 and output portion 21 of shaft 22 is moved about axis 8 to allow gear 26 to rotate about axis 8 and mesh selectively with gears 43.

Finally, cylinder 49 is moved into the release position, member 27 is locked angularly again to plate 13 by cylinder 30, and the whole defined by sleeve 9, plate 13, member 27, and assemblies 39 is positioned about axis 8 to move the selected assembly 39 into a work position (Figure 2) in which relative tools 44 machine finish edge 5, and to move the other two assemblies 39 into a rest position detached from panel 2.

Unit 1 also comprises a blower 52, in turn comprising a tubular bar 53, which extends in direction 20, projects upwards from bracket 18, has a number of holes 54 aligned in direction 20, and is connected to a known compressed-air device (not shown) to blow off chips and/or scrap produced by tools 44, and/or to clean edge 4 of panel 2 before gluing on finish edge 5.

It should be pointed out that :
unit 1 may be used either as an aggregate connectable to a power spindle for powering propeller shaft 22, or as an independent machining unit with its own electric motor for powering shaft 22;
the whole defined by sleeve 9, plate 13, member 27, and assemblies 39 is also moved about axis 8 when machining finish edge 5, to allow unit 1 to follow the contour of edge 4 correctly; and
having three pairs of milling tools 44 with different milling radii, unit 1 is highly versatile, and the milling radius can be changed quickly as required.

## Claims

1. A machining unit for machining, in particular trimming, finish edges (5) of wood panels (2) or similar, the machining unit comprising a frame (7); a propeller shaft (22) fitted through the frame (7) to rotate about a respective longitudinal first axis (24); and a first pair of milling tools (44) connected to the frame (7) and rotated by the propeller shaft (22) about a respective longitudinal second axis (41); the machining unit being **characterized by** also comprising at least a second pair of milling tool (44) connected to the frame (7) and rotated by the propeller shaft (22) about a respective longitudinal third axis (41); and a first selector device (9) for selectively moving each pair of milling tools (44) between a work position, in which the relative milling tools (44) machine a finish edge (5), and a rest position.

2. A machining unit as claimed in Claim 1, and also comprising, for each pair of milling tools (44), a secondary shaft (40) fitted in angularly fixed manner through the relative milling tools (44) and connected to said propeller shaft (22).

3. A machining unit as claimed in Claim 1, and also comprising, for each pair of milling tools (44), a secondary shaft (40) fitted in angularly fixed manner through the relative milling tools (44) and connectable to said propeller shaft (22); a second selector device (9, 27) being provided to move each secondary shaft (40) and the propeller shaft (22) with respect to each other between a connected position connecting the secondary shaft (40) to the propeller shaft (22), and a disconnected position disconnecting the secondary shaft (40) from the propeller shaft (22).

4. A machining unit as claimed in Claim 3, wherein said second and third axis (41) are spaced about a fourth axis (8) parallel to and separate from the first axis (24); the second selector device (9, 27) being designed to move the propeller shaft (22) and the secondary shafts (40) with respect to one another about the fourth axis (8), to connect the propeller shaft (22) selectively to the secondary shafts (40).

5. A machining unit as claimed in Claim 4, wherein the propeller shaft (22) comprises an output portion (21) coaxial with the first axis (24); an input portion coaxial with the fourth axis (8); and joint means (23) for connecting said input portion to said output portion (21).

6. A machining unit as claimed in any one of the foregoing Claims, wherein the first selector device (9) comprises a first rotary member (9) fitted in rotary manner to the frame (7) to move the pairs of milling tools (44) between the relative said work positions and rest positions.

7. A machining unit as claimed in Claim 6 when dependent on any one of Claims 3 to 5, wherein the second selector device (9, 27) comprises a second rotary member (27) connected in rotary manner to the first rotary member (9) to move each secondary shaft (40) and the propeller shaft (22) with respect to each other between the relative said connected and disconnected positions.

8. A machining unit as claimed in Claim 7, and also comprising a first lock device (30) movable between a lock position, in which said first and said second rotary member (9, 27) are connected in angularly fixed manner, and a release position, in which said first and said second rotary member (9, 27) are connected in rotary manner.

9. A machining unit as claimed in Claim 8, and also comprising a second lock device (49) for angularly locking the second rotary member (27) when the first lock device (30) is in the release position.

10. A machining unit as claimed in any one of Claims 6 to 9, and also comprising, for each pair of milling tools (44), a face tracer (46) for following the contour of a major lateral face (6) of the finish edge (5); the machining unit also comprising a first slide (13), which is movable, with respect to the first rotary member (9), in a first direction (12) crosswise to said first, second and third axis (24, 41), and supports the face tracers (46) and the milling tools (44).

11. A machining unit as claimed in any one of Claims 6 to 10, and also comprising, for each pair of milling tools (44), a top tracer (47) for following the contour of a top face (3) of the panel (2); and a bottom tracer (48) for following the contour of a bottom face (3) of the panel (2).

12. A machining unit as claimed in Claim 11, and also comprising a second slide (35), which is movable, with respect to the first rotary member (9), in a second direction (20) parallel to said first, second and third axis (24, 41), and supports the top tracers (47) and top milling tools (44); and a third slide (36), which is movable in the second direction (20) with respect to the first rotary member (9), and supports the bottom tracers (48) and bottom milling tools (44).

13. A machining unit as claimed in Claim 12 when dependent on any one of Claims 7 to 9, wherein said second and said third slide (35, 36) are fitted slidably to said second rotary member (27).

14. A machining unit as claimed in any one of the foregoing Claims, wherein each pair of milling tools (44) has a different milling radius from the other pairs of milling tools (44).

15. A machining unit as claimed in any one of the foregoing Claims, and also comprising a blower (52) connectable to a compressed-air device to blow off machining chips and/or scrap.
